# EUROPÄISCHE PATENTANMELDUNG

(11) **EP 1 647 391 A1**
(43) Veröffentlichungstag der Anmeldung: **19.04.2006**
(21) Anmeldenummer: 05021905.4
(22) Anmeldetag: 08.10.2005
(51) Int. Cl.: B29C 49/62

(54) **Verfahren und Vorrichtung zur Blasformung von Behältern**

(30) Priorität: 16.10.2004 DE 102004050470
(71) Anmelder: SIG Technology Ltd., 8212 Neuhausen Rhine Falls (CH)
(72) Erfinder: Linke, Michael, 22926 Ahrensburg (DE); Vogel, Klaus, 22885 Barsbüttel (DE); Litzenberg, Michael, 21502 Geesthacht (DE)
(74) Vertreter: Klickow, Hans-Henning

(57) **Zusammenfassung**

Das Verfahren und die Vorrichtung dienen zur Blasformung von Behältern. Ein Vorformling wird hierbei nach einer thermischen Konditionierung innerhalb einer Blasform von einer Reckstange gereckt und durch Blasdruckeinwirkung in den Behälter umgeformt. Mindestens zwei Blasstationen werden von einem Blasrad auf einem geschlossenen Umlaufweg transportiert. Nach einer Behälterformung wird Blasluft aus den Blasstationen heraus in einen Innenbereich des Blasrades über mindestens einen Schalldämpfer (48) abgelassen. Der Schalldämpfer wird mindestens bereichsweise auf einem Höhenniveau unterhalb eines Höhenniveaus der Blasformen (3) angeordnet. Der Schalldämpfer strömt Blasluft ab, die einen relativ zu einer Umgebungsluft verminderten Feuchtigkeitsgehalt besitzt. Die abströmende Blasluft wird mindestens zum Teil an den Blasstationen vorbeigeleitet.

## Beschreibung

Die Erfindung betrifft ein Verfahren zur Blasformung von Behältern, bei dem ein Vorformling nach einer thermischen Konditionierung innerhalb einer Blasform von einer Reckstange gereckt und durch Blasdruckeinwirkung in den Behälter umgeformt wird und bei dem mindestens zwei Blasstationen von einem Blasrad auf einem geschlossenen Umlaufweg transportiert werden sowie bei dem nach einer Behälterformung Blasluft aus den Blasstationen in einen Innenbereich des Blasrades über mindestens einen Schalldämpfer abgelassen wird.

Die Erfindung betrifft darüber hinaus eine Vorrichtung zur Blasformung von Behältern, die mindestens zwei auf einem Blasrad angeordnete und mit Blasformen versehene Blasstationen zur Umformung von thermoplastischen Vorformlingen in die Behälter aufweist sowie bei der die Blasstationen zur Ableitung von Blasluft nach einer Behälterformung in einen Innenbereich des Blasrades mit mindestens einem Schalldämpfer verbunden sind.

Bei einer derartigen Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu ex-pandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE - OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Aus der DE 201 14 670 U1 ist es bereits bekannt, einen mit einer Blasstation verbundenen Schalldämpfer in ein Raumvolumen eines Blasrades derart zu integrieren, daß eine Blasluftableitung in Richtung auf einen Innenbereich des Blasrades erfolgt. Der Schalldämpfer ist dabei auf einem Höhenniveau oberhalb der Blasstationen angeordnet, so daß sich die ausströmende verbrauchte Blasluft im wesentlichen in lotrechter Richtung nach oben aus dem Bereich des Blasrades herausströmt.

Aufgabe der vorliegenden Erfindung ist es, ein Verfahren der einleitend genannten Art derart zu verbessern, daß eine dauerhafte Betriebsfähigkeit unterstützt wird.

Diese Aufgabe wird erfindungsgemäß dadurch gelöst, daß der Schalldämpfer mindestens bereichsweise auf einem Höhenniveau unterhalb eines Höhenniveaus der Blasformen Blasluft abströmt, die einen relativ zu einer Umgebungsluft verminderten Feuchtigkeitsgehalt besitzt und daß die abströmende Blasluft mindestens zum Teil an den Blasstationen vorbeigeleitet wird.

weitere Aufgabe der vorliegenden Erfindung ist es, eine Vorrichtung der einleitend genannten Art derart zu konstruieren, daß eine störungsarme Betriebsfähigkeit unterstützt wird.

Diese Aufgabe wird erfindungsgemäß dadurch gelöst, daß der Schalldämpfer mindestens bereichsweise auf einem Höhenniveau unterhalb eines Höhenniveaus der Blasformen angeordnet ist, daß die Blasstationen an eine Blasluftversorgung mit Lufttrocknung angeschlossen sind und daß zwischen den Blasstationen bezüglich des Blasrades von innen nach außen verlaufende Strömungswege für aus dem Schalldämpfer herausströmende Blasluft angeordnet sind.

Die Ausströmung der verbrauchten Blasluft auf einem Höhenniveau unterhalb der Blasformen in Verbindung mit der Verwendung von getrockneter Blasluft ermöglicht durch die Vorbeileitung der ausströmenden Blasluft an den Blasstationen eine deutliche Verminderung einer Korrosionsneigung. Bei einem Ablassen der Blasluft aus den Blasstationen tritt eine erhebliche Druckabsenkung auf, die zu einer Abkühlung der Blasluft und somit auch zu einer Abkühlung der im wesentlichen metallischen Bauteile der Blasstationen führt.

Durch den Kontakt dieser gekühlten Bereiche der Blasstationen mit häufig feuchter und warmer Umgebungsluft treten Kondensationserscheinungen auf, die zu Korrosionen oder anderweitigen ungünstigen Materialveränderungen führen. Durch die Vorbeileitung der getrockneten abströmenden Blasluft an den Blasstationen wird eine Feuchtigkeitskondensation überwiegend verhindert, für den unwahrscheinlichen Fall einer erfolgenden Kondensation erfolgt schnell wieder eine Trocknung. Die Anordnung der Schalldämpfer auf einem Höhenniveau unterhalb der Blasformen unterstützt eine vorteilhafte Strömungsführung.

Eine günstige Strömungsführung wird auch dadurch unterstützt, daß die den Schalldämpfern entströmende Blasluft vollständig auf einem unterhalb des Höhenniveaus der Blasformen liegenden Höhenniveau in einen Innenbereich des Blasrades hineingeleitet wird.

Für eine gleichmäßige Strömungsführung erweist es sich als besonders vorteilhaft, daß von den Schalldämpfern die Blasluft in eine im wesentlichen ringartig verlaufende Ausgleichskammer hineingeleitet wird.

Eine verbesserte Geräuschdämpfung kann dadurch erreicht werden, daß von der Ausgleichskammer eine Stufe des Schalldämpfers bereitgestellt wird.

Ebenfalls trägt es zu einer gleichmäßigen Strömungsführung bei, daß durch eine Mehrzahl von Ausströmöffnungen hindurch Blasluft aus der Ausgleichskammer in Richtung auf das Blasradzentrum geleitet wird.

Eine Vorbeiführung eines möglichst großen Anteiles der abströmenden Blasluft an den Blasstationen vorbei wird dadurch unterstützt, daß eine Strömung abgeleiteter Blasluft in lotrechter Richtung nach unten aus dem Blasrad heraus durch eine Strömungssperre verhindert wird.

Sowohl hinsichtlich der Schalldämpfung als auch hinsichtlich der Strömungsführung erweist es sich als vorteilhaft, daß die Blasluft aus dem Schalldämpfer heraus in ein im wesentlichen topfartig begrenztes Blasrad hineingeleitet wird.

Eine gezielte Strömungsführung in Richtung auf die Blasstationen und an den Blasstationen vorbei kann dadurch erreicht werden, daß zur Strömungsführung in Richtung auf die Blasstationen Strömungsleiteinrichtungen verwendet werden.

Eine weitere Steigerung der Effektivität hinsichtlich einer Nutzung der abströmenden Blasluft wird dadurch erreicht, daß eine Ableitung von aus den Schalldämpfern herausströmender Blasluft in lotrechter Richtung nach oben aus dem Blasrad heraus durch eine Strömungssperre vermieden wird.

Gemäß einer vereinfachten Ausführungsvariante ist auch daran gedacht, daß die Blasstationen direkt an die Ausgleichskammer angeschlossen werden und daß die Ausgleichskammer als Schalldämpfer verwendet wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: einen Vertikalschnitt durch ein Blasrad mit ringförmigen innerhalb einer Ausgleichskammer angeordneten Schalldämpfern und einer Blasluftableitung in Richtung auf einen Innenraum des Blasrades und
- Fig. 6: eine vergrößerte Darstellung der Anordnung gemäß Fig. 5 in einem Anschlußbereich einer Blasstation an den Schalldämpfer.

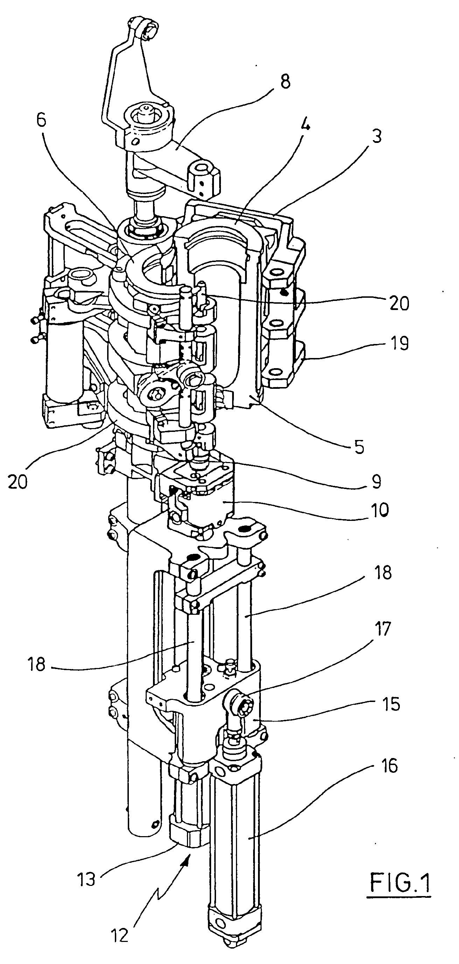

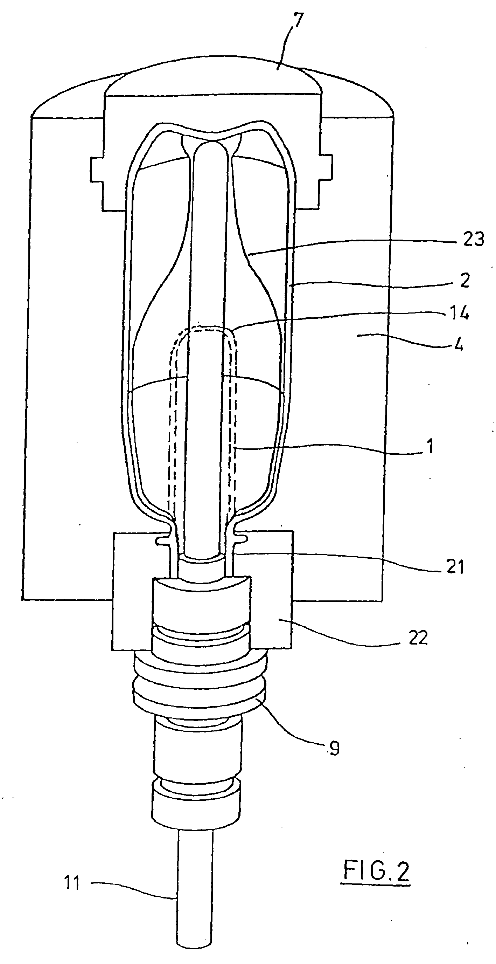

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

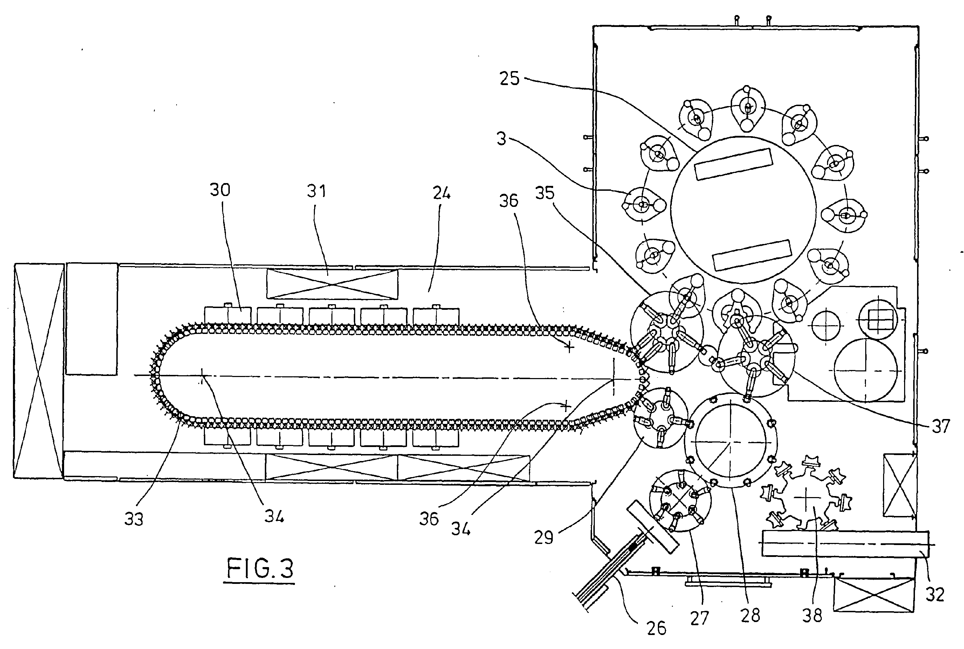

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Haupt-blasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.
Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von ketten-artigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

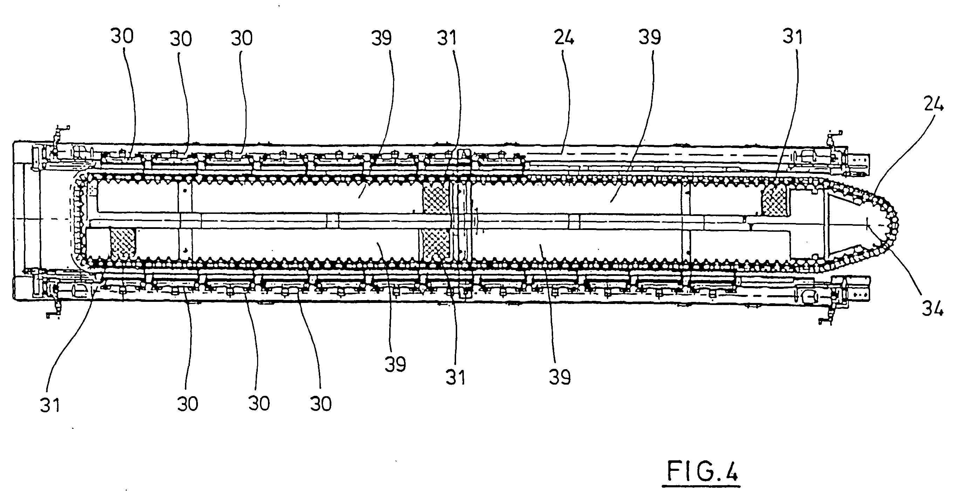

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungs-richtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

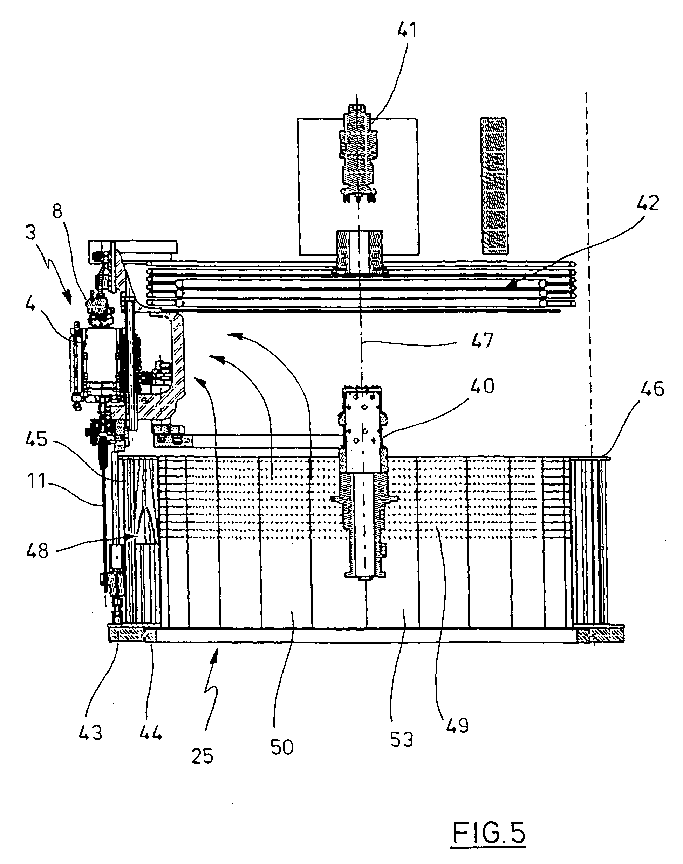

Fig. 5 zeigt einen Vertikalschnitt durch das Blasrad (25). Die Blasstationen (3) sind entlang eines Umfanges des Blasrades (25) angeordnet. Beispielhaft ist eine Blasstation (3) eingezeichnet. In einem mittleren Bereich eines Blasrades (25) ist ein Drehverteiler (40) zur Zufuhr und Ableitung von flüssigen Temperiermedien für die Blasstation (3) angeordnet. In lotrechter Richtung oberhalb des Drehverteilers (40) ist ein weiterer Drehverteiler (41) für die Druckluftversorgung der Blasstation (3) positioniert. Eine Betriebsmittelverteilung erfolgt unter Verwendung einer Blasradkonsole (42).

Eine Tragstruktur des Blasrades (25) besteht im wesentlichen aus einem ringförmigen Basiselement (43), das rotationsfähig außenseitig an einem Zentralring (44) geführt ist. Auf dem Basiselement (43) ist eine Tragwand (45) angeordnet, die im Bereich ihrer dem Basiselement (43) abgewandten Ausdehnung einen Montagering (46) trägt. Auf dem Montagering (46) sind die Blasstationen (3) befestigt. Die Blasformen (4) sind in lotrechter Richtung auf einem Höhenniveau oberhalb des Montageringes (46) angeordnet.

In Richtung auf ein Blasradzentrum (47) neben der Tragwand (45) sind ein oder mehrere Schalldämpfer (48) angeordnet, die mit Ausströmöffnungen versehen sind. An die Schalldämpfer (48) sind die Blasstationen (3) zur Ableitung von Blasluft nach einem Abschluß des Blasvorganges angeschlossen.

Bei dem in Fig. 5 dargestellten Ausführungsbeispiel sind alle Blasstationen (3) jeweils an einen eigenen Schalldämpfer (48) angeschlossen und die Schalldämpfer (48) sind in einer gemeinsamen Ausgleichskammer (51) angeordnet. Die Ausgleichskammer (51) erstreckt sich im wesentlichen ringförmig um das Blasradzentrum (47) herum und ist von einer Innenwand (50) begrenzt, die mit Ausströmöffnungen (49) versehen ist. Der Schalldämpfer (48) ist zumindest im wesentlichen Bereich seiner Ausdehnung auf einem Höhenniveau unterhalb des Höhenniveaus der Blasform (4) angeordnet.

Eine Blasluftversorgung der Blasstationen (3) ist an einen oder mehrere Kompressoren angeschlossen. Den Kompressoren vorschaltet sind Lufttrockner. Die Blasstationen (3) werden hierdurch mit getrockneter Luft versorgt. Die aus den Schalldämpfern (48) ausströmende Druckluft wird an den Blasstationen (3) vorbeigeleitet, um eine Kondensation von Feuchtigkeit zu vermeiden bzw. um bereits abgeschiedenes Kondensat zur Trocknung aufzunehmen.

Vorteilhafterweise wird das Blasrad (25) im Bereich seines Bodens und auf einem Höhenniveau oberhalb der Blasform (4) in geeigneter Weise abgedichtet oder mit Strömungsleitelementen versehen, um einen möglichst großen Anteil der aus dem Schalldämpfer (48) ausströmenden Luft an den Blasstationen (3) vorbeizuführen.

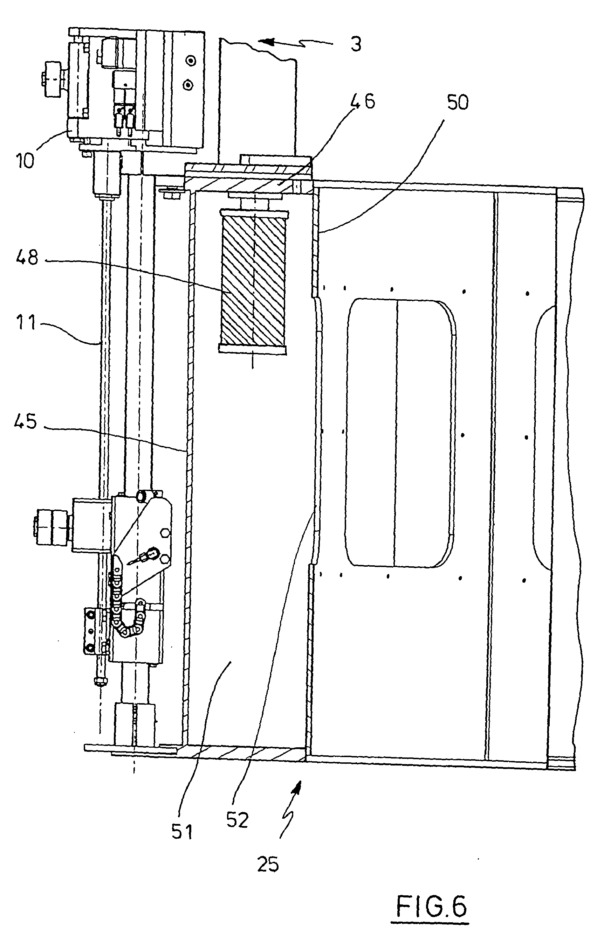

Fig. 6 zeigt eine vergrößerte Darstellung zur Veranschaulichung eines Anschlusses der Blasstationen (3) an den Schalldämpfer (48). Es ist zu erkennen, daß jeder Blasstation (3) ein separater Schalldämpfer (48) zugeordnet ist und daß alle Schalldämpfer (48) in einer Ausgleichskammer (51) positioniert sind, die zwischen der Tragwand (45) und der Innenwand (50) angeordnet ist. Die Ausgleichskammer (51) erstreckt sich dabei im wesentlichen ringförmig um das Blasradzentrum (47) herum.

Bei der in Fig. 6 dargestellten Ausführungsform sind die Ausströmöffnungen (49) nicht unmittelbar im Bereich der Innenwand (50) angeordnet, sondern die Innenwand (50) ist mit zugangsausnehmungen (52) versehen, um eine Montage und Demontage der Schalldämpfer (48) zu unterstützen. In Richtung auf das Blasradzentrum (47) neben der Innenwand (50) werden bei dieser Ausführungsform verkleidungselemente angeordnet, die mit den Ausströmöffnungen (49) versehen sind. Durch die Anordnung der Schalldämpfer (48) innerhalb der Ausgleichskammer (51) wird eine sehr gleichmäßige Ausströmung der getrockneten Luft in Richtung auf das Blasradzentrum (47) und anschließend an der Blasstation (3) entlang unterstützt.

## Patentansprüche

1. Verfahren zur Blasformung von Behältern, bei dem ein Vorformling nach einer thermischen Konditionierung innerhalb eines Blasform von einer Reckstange gereckt und durch Blasdruckeinwirkung in den Behälter umgeformt wird und bei dem nach einer Behälterformung Blasluft aus den Blasstationen in einen Innenbereich des Blasrades über mindestens einen Schalldämpfer abgelassen wird, **dadurch gekennzeichnet, daß** der Schalldämpfer (48) mindestens bereichsweise auf einem Höhenniveau unterhalb eines Höhenniveaus der Blasformen (4) Blasluft abströmt, die einen relativ zu einer Umgebungsluft verminderten Feuchtigkeitsgehalt besitzt und daß die abströmende Blasluft mindestens zum Teil an den Blasstationen (3) vorbeigeleitet wird.

2. Verfahren nach Anspruch 1, **dadurch gekennzeichnet, daß** die den Schalldämpfern (48) entströmende Blasluft vollständig an einem unterhalb des Höhenniveaus der Blasformen (4) liegenden Höhenniveau in einen Innenbereich des Blasrades (25) hineingeleitet wird.

3. Verfahren nach Anspruch 1 oder 2, **dadurch gekennzeichnet, daß** die Schalldämpfer (48) die Blasluft in eine im wesentlichen ringartig verlaufende Ausgleichskammer (51) hineingeleitet wird.

4. Verfahren nach einem der Ansprüche 1 bis 3, **dadurch gekennzeichnet, daß** von der Ausgleichskammer (51) eine Stufe des Schalldämpfers (48) bereitgestellt wird.

5. Verfahren nach einem der Ansprüche 1 bis 4, **dadurch gekennzeichnet, daß** durch eine Mehrzahl von Ausströmöffnungen (49) hindurch Blasluft aus der Ausgleichskammer (51) in Richtung auf das Blasradzentrum (47) geleitet wird.

6. Verfahren nach einem der Ansprüche 1 bis 5, **dadurch gekennzeichnet, daß** eine Strömung abgeleiteter Blasluft in lotrechter Richtung nach unten aus dem Blasrad (25) heraus durch eine Strömungssperre verhindert wird.

7. Verfahren nach einem der Ansprüche 1 bis 6, **dadurch gekennzeichnet, daß** die Blasluft aus dem Schalldämpfer (48) heraus in ein im wesentlichen topfartig begrenztes Blasrad (25) hineingeleitet wird.

8. Verfahren nach einem der Ansprüche 1 bis 7, **dadurch gekennzeichnet, daß** zur Strömungsführung in Richtung auf die Blasstation (3) Strömungsleiteinrichtungen verwendet werden.

9. Verfahren nach einem der Ansprüche 1 bis 8, **dadurch gekennzeichnet, daß** eine Ableitung von aus den Schalldämpfern (48) herausströmender Blasluft in lotrechter Richtung nach oben aus dem Blasrad heraus durch eine Strömungssperre vermieden wird.

10. Verfahren nach einem der Ansprüche 1 bis 9, **dadurch gekennzeichnet, daß** die Blasstationen (3) direkt an die Ausgleichskammer (51) angeschlossen werden und daß die Ausgleichskammer (51) als Schalldämpfer (48) verwendet wird.

11. Vorrichtung zur Blasformung von Behältern, die mindestens eine Blasstation mit einer Blasform sowie mindestens einer Reckstange aufweist, sowie bei der mindestens zwei Blasstationen auf einem Blasrad angeordnet sind, die zur Ableitung von Blasluft nach einer Behälterformung in einen Innenbereich des Blasrades mit mindestens einem Schalldämpfer verbunden sind, **dadurch gekennzeichnet, daß** der Schalldämpfer (48) mindestens bereichsweise auf einem Höhenniveau unterhalb eines Höhenniveaus der Blasformen (4) angeordnet ist, daß die Blasstationen (3) an eine Blasluftversorgung mit Lufttrocknung angeschlossen sind und daß zwischen den Blasstationen (3) bezüglich des Blasrades (25) von innen nach außen verlaufende Strömungswege für aus dem Schalldämpfer (48) herausströmende Blasluft angeordnet sind.

12. Vorrichtung nach Anspruch 11, **dadurch gekennzeichnet, daß** der Schalldämpfer (48) vollständig auf einem Höhenniveau unterhalb des Höhenniveaus der Blasform (4) angeordnet ist.

13. Vorrichtung nach Anspruch 11 oder 12, **dadurch gekennzeichnet, daß** der Schalldämpfer (48) in einer im wesentlichen bezüglich eines Blasradzentrums (47) ringförmig verlaufenden Ausgleichskammer (51) angeordnet ist.

14. Vorrichtung nach einem der Ansprüche 11 bis 13, **dadurch gekennzeichnet, daß** die Ausgleichskammer (51) eine Dämpfungsstufe bereitstellt.

15. Vorrichtung nach einem der Ansprüche 11 bis 14, **dadurch gekennzeichnet, daß** die Ausgleichskammer (51) eine Innenwand (50) mit Ausströmöffnungen (49) aufweist.

16. Vorrichtung nach einem der Ansprüche 11 bis 15, **dadurch gekennzeichnet, daß** das Blasrad (25) in lotrechter Richtung nach unten im wesentlichen geschlossen ausgebildet ist.

17. Vorrichtung nach Anspruch 16, **dadurch gekennzeichnet, daß** das Blasrad (25) eine im wesentlichen topfartige Gestaltung aufweist.

18. Vorrichtung nach einem der Ansprüche 11 bis 17, **dadurch gekennzeichnet, daß** in einem Innenraum (53) des Blasrades (25) mindestens eine Strömungsleiteinrichtung angeordnet ist.

19. Vorrichtung nach einem der Ansprüche 11 bis 18, **dadurch gekennzeichnet, daß** das Blasrad (25) in lotrechter Richtung nach oben im wesentlichen geschlossen ausgebildet ist.

20. Vorrichtung nach einem der Ansprüche 11 bis 19, **dadurch gekennzeichnet, daß** die Ausgleichskammer (51) den Schalldämpfer (48) mindestens bereichsweise ausbildet.
